Europäisches Patentamt

(19) European Patent Office

Office européen des brevets

(11) Numéro de publication: **0 080 402 B1**

(12) # FASCICULE DE BREVET EUROPEEN

(45) Date de publication du fascicule du brevet: 26.02.86

(51) Int. Cl.⁴: **G 01 N 27/00**

(21) Numéro de dépôt: **82402088.7**

(22) Date de dépôt: **16.11.82**

(54) Dispositif de mesure de la concentration d'une espèce chimique ionique et application de ce dispositif à la mesure du pH d'une solution.

(30) Priorité: **18.11.81 FR 8121592**

(43) Date de publication de la demande:
**01.06.83 Bulletin 83/22**

(45) Mention de la délivrance du brevet:
**26.02.86 Bulletin 86/9**

(84) Etats contractants désignés:
**DE GB IT NL**

(56) Documents cités:
**DE - A - 2 947 050**
**FR - A - 2 438 271**
**GB - A - 2 072 418**

**IEEE TRANSACTIONS ON BIOMEDICAL ENGINEERING, vol. BME-25, no. 1, janvier 1978, pages 49-54, New York (USA); S.D. MOSS et al.: "Hydrogen, calcium and potassium ion-sensitive FET transducers: A preliminary report"**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Gautier, Jacques, 7 Lot. La Dalmassiere Coublevie, F-38500 Voiron (FR)**
Inventeur: **Kobierska, Elzbieta, 4 Bis, rue Casimir Brenier, F-38000 Grenoble (FR)**

(74) Mandataire: **Mongrédien, André et al, c/o BREVATOME 25, rue de Ponthieu, F-75008 Paris (FR)**

LIBER. STOCKHOLM 1986

**0 080 402**

**Description**

La présente invention à pour objet un dispositif de mesure de la concentration d'une espèce chimique ionique. Elle permet notamment de mesurer la concentration d'ions $H^+$ contenus dans une solution électrolytique et donc la détermination du pH de cette solution.

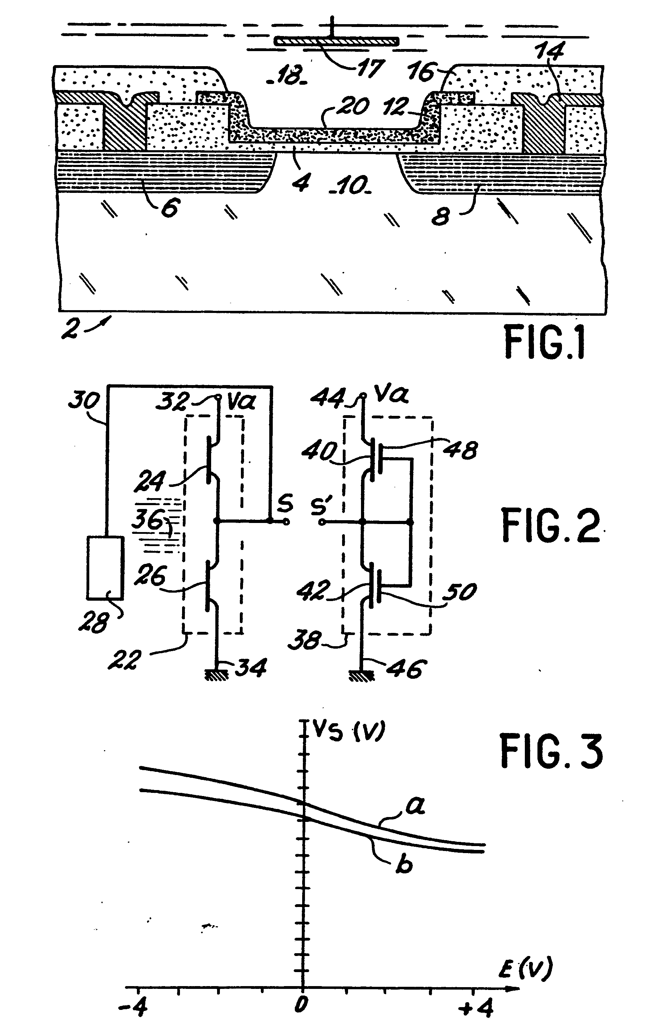

Les dispositifs de mesure connus jusqu'à ce jour sont généralement constitués d'un transistor à effet de champ ionosensible à canal P ou N realisé sous forme intégrée. Ces transistors ionosensiblea, dans le cas de transistors à canal P, sont constitués, comme représenté sur la figure 1, par un transistor MOS 2 comportant une couche ionosenaible, c'est-à-dire une couche présentant une activité électrique fonction de la concentration de l'espèce chimique ionique à mesurer.

Dans le cas de la détermination de la concentration en ions $H^+$ d'une solution, c'est-à-dire de la mesure du pH de cette solution, cette couche ionosensible peut être constituée par la couche de silice 4 recouvrant la source et le drain du transistor correspondant aux regions du type p+ respectivement 6 et 8, définies dans un substrat en silicium 10 du type N, ou bien par une autre couche 12 recouvrant la couche de silice 4 du transistor MOS 2.

Ce transistor MOS est de plus muni d'une couche métallique 14, jouant le rôle d'interconnexion, réalicée généralement en aluminium recouvert d'une couche isolante 16 généralement en silice.

Ces dispositifs de mesure comprennent de plus une électrode de référence 17 reliée electriquement au transistor à effet de champ.

La détermination de la concentration d'une espece chimique ionique est effectuée en plaçant la couche ionosensible par exemple 12 et l'électrode de référence 17 dans une solution 18 ou électrolyte contenant l'espèce chimique à mesurer. Dans ce cas, l'activité électrique de la couche ionosensible se traduit par l'apparition d'une différence de potentiel E à son interface 20 avec la solution, différence de potentiel qui suit au premier ordre la loi de Nernst.

Les variations de la concentration de l'espèce chimique à mesures entraînent des modulations du potentiel E induisant, par l'intermédiaire du champ électrique dans la couche de silice 4, une modification de la quantité de porteurs dans le canal P du transistor à effet de champ. Cette modification de la quantité de porteurs dans le canal entraîne une variation du courant électrique entre la source 6 et le drain 8 du transistor MOS 2.

Afin que le signal de sortie du transistor à ef fet de champ ionosensible, c'est-à-dire du dispositif de mesure, ne dépende pas des paramètres électriques du dispositif lui-même ou de leur variation avec la température, il a été envisagé d'associer à l'électrode de référence un système d'asservissement permettant d'asservir la polarisation de ladite électrode. Ce système d'asservissement est constitué en particulier de plusieurs amplificateurs opérationnels, branchés en série avec l'électrode de référence.

Cet asservissement permet de maintenir le transistor à effet de champ ionosensible à un point de polarisation constante. Dans ce cas, les variations de la tension à l'interface électrolyte-couche ionosensible sont alors égales aux variations de la polarisation de l'électrode de référence. Cependant, ce type d'asservissement ne permet pas de s'affranchir des variations des paramètres électriques du transistor ionosensible en fonction de la température.

Afin de supprimer cet effet, la détermination de la concentration de l'espèce chimique ionique peut se faire en effectuant une mesure différentielle. Cette mesure différentielle est effectuée entre un transistor à effet de champ ionosensible et un transistor classique présentant les mêmes paramètres électriques que le transistor à effet de champ ionosensible. Dans ce cas, la polarisation de l'électrode de référence est asservie de façon que les courants traversant les deux transistors soient identiques. Comme précédemment, le système d'asservissement de la polarisation de l'électrode de référence est constitue principalement de plusieurs amplificateurs opérationnels.

Pour supprimer cet effet de la température, il a été envisagé d'autres types de circuits permettant de faire une mesure différentielle. Ces circuits peuvent être constitués d'une part de deux transistors à effet de champ ionosensible plongeant tous les deux dans la solution contenant l'espèce chimique que l'on veut mesurer, l'un de ces deux transistors à effet de champ servant de référence, et d'autre part d'une pseudo-électrode de référence ayant un potentiel fixe. Les deux transistors à ef fet de champ sont reliés électriquement entre eux par l'intermédiaire de plusieurs amplificateurs opérationnels. Le signal de mesure utilisé pour la détermination de la concentration de l'espèce chimique, est la différence existant entre les courants des deux transistors. Un tel dispositif a été décrit dans un article de P.A. COMTE et J. JANATA intitulé 'A field effect transistor as a solid-state reference electrode'' et paru dans 'Analytica Chimica Acta', 101 (1978).

Etant donné que ces différentes techniques de mesure différentielle mettent en oeuvre plusieurs amplificateurs opérationnels, il en resulte des problàmes de compatibilité de technologie importants lorsque l'on désire réaliser les différents circuits correspondants sous la forme de circuits intégrés.

L'invention a justement pour objet un dispositif de mesure de la concentration d'une espèce chimique ionique pouvant être réalisé à l'aide de circuits intégrés.

Le principe de l'invention consiste à faire exécuter les fonctions de détection du signal électrique, existant entre la source et le drain du transistor à effet de champ ionosensible ainsi que les fonctions d'amplification de ce signal électrique par les mêmes transistors. Ceci peut être rendu possible par l'utilisation d'une technologie CMOS.

De façon plus précise, l'invention a pour objet un dispositif de mesure de la concentration d'une espèce chimique ioniqu en utilisant des transistors MOS ionsensibles, se caractérisant en ce qu' il comprend un inverseur CMOS, formé d'un transistor MOS ionosensible à canal P, muni d'une première couche ionosensible,

2

et d'un transistor MOS ionosensible à canal N, muni d'une deuxième couche ionosensible, ces deux transistors étant reliés électriquement en série, et en ce qu' il comprend une électrode de référence reliée électriquement à la sortie de l'inverseur.

Ce dispositif de conception beaucoup plus simple que celle des dispositifs de l'art antérieur présente d'importants avantages liés à l'emploi d'une technologie CMOS. On peut noter, en particulier, comme avantages, l'existence d'un effet différentiel entre les deux transistors et la valeur élevée du gain de l'inverseur formé par ces deux transistors.

De préférence, la première couche et la deuxième couche ionosensibles sont identiques. Elles peuvent être réalisées par exemple en silice, en nitrure de silicium, en alumine ou en oxyde de tantale. L'emploi de ces couches ionosensibles permet d'utiliser le dispositif, conformément à l'invention, à la détermination du pH d'une solution.

Afin de s'affranchir des variations en fonction de la température des paramètres électriques de l'inverseur, le dispositif de mesure selon l'invention peut être muni d'un second inverseur CMOS servant de référence afin de réaliser une mesure différentielle entre le premier et le second inverseurs.

Ce second inverseur peut être formé, soit d'un transistor MOS à canal P et d'un transistor -MOS à canal N de type classique reliés en série, soit formé d'un transistor à ef fet de champ ionosensible à canal P et d'un transistor à effet de champ ionosensible à canal N reliés en série.

D'autres caractéristiques et avantages de l'invention ressortiront mieux de la description qui va suivre, donnée à titre illustratif et non limitatif, en référence aux figures annexées sur lesquelles:

- la figure 1, déjà décrite, représente schématiquement, en coupe, la structure d'un transistor MOS ionosensible,

- la figure 2 représente schématiquement un dispositif de mesure conforme à l'invention, et

- la figure 3 représente schématiquement des courbes donnant la variation de la tension de sortie $V_s$ du dispositif de l'invention, exprimée en volt, en fonction du potentiel E existant à l'interface électrolyte-couche ionosensible, exprimé en volt.

En se référant à la figure 2, le dispositif de mesure conformément à l'invention, comprend un inverseur CMOS 22, formé d'un transistor MOS ionosensible à canal P 24 et d'un transistor MOS ionosensible à canal N 26. Ces deux transistors MOS ionosensibles sont munis chacun de façon connue d'une couche ionosensible (figure 19, ces couches ionosensibles étant de préférence identiques. Ces couches ionosensibles peuvent être constituées par exemple par une couche en silice, en nitrure de silicium, en alumine ou en oxyde de tantale recouvrant la couche de silice des transistors.

Ce dispositif est de plus muni d'une électrode de référence 28 reliée par un fil conducteur 30 à la sortie S de l'inverseur CMOS 22 dont les entrées 32 et 34 sont connectées respectivement à la borne positive et à la masse d'une source d'alimentation électrique (non représentée).

La mesure de la concentration d'une espèce chimique ionique est ef fectuée en plaçant l'inverseur CMOS 22 et l'électrode de référence 28 dans une solution 36 contenant l'espèce chimique à mesurer.

L'utilisation de couches ionosensibles en silice, en alumine, en oxyde de tantale et plus particulièrement en nitrure de silicium permet notamment de déterminer la concentration en ions H+ d'une solution, c'est-à-dire de déterminer le pH de celle-ci.

Pour une tension d'alimentation suffisante, les deux transistors MOS se trouvent en régime de saturation. La tension de sortie de l'inverseur CMOS notée $V_s$ est régie par l'équation:

$$V_s = \frac{V_a}{1 + \sqrt{\gamma}} - \frac{A}{1+A} E + C$$

dans laquelle $V_a$ représente la tension fournie par la source d'alimentation à l'inverseur CMOS, $\gamma$ le rapport de la transconductance, à tension de drain faible, du transistor MOS ionosensible à canal N sur celle du transistor MOS ionosensible à canal P, E la tension à l'interface électrolyte-couche ionosensible, C une constante fonction des paramètres électriques des deux transistors MOS et A le gain en tension, en valeur absolue, de l'inverseur CMOS, ce gain devant être grand devant l'unite.

On constate donc que la mesure de la tension de sortie de l'inverseur $V_s$ permet de connaître à une constante C près, la valeur de la tension E à l'interface électrolyte-couche ionosensible, tension qui est fonction de la concentration de l'espèce chimique à mesurer, cette tension E suivant au premier ordre la loi de Nernst.

Sur la figure 3, on a représente deux courbes donnant la variation expérimentale de la tension de sortie $V_s$ de l'inve--eur CMOS en fonction de la tension E à l'interface électrolyte-couche ionosensible. La courbe a correspond à une tension d'alimentation de l'inverseur CMOS égale à 8 volts et la courbe b à une tension d'alimentation égale à 5 volts.

Sur ces deux courbes, seule la partie linéaire et centrale est utilisée pour les mesures des concentrations.

Afin de s'affranchir de l'influence de la température sur les paramètres électriques des deux transistors MOS constituant l'inverseur CMOS 22, un second inverseur CMOS 38, comme représenté sur la figure 2, peut être associé au premier inverseur CMOS. Ce second inverseur CMOS 38 présentant les mêmes paramètres électriques que le premier inverseur CMOS 22, peut être formé d'un transistor MOS à canal P de type classique 40 et d'un transistor MOS à canal N de typé classique 42, reliés en série. Les bornes d'entrée 44 et 46 de ce deuxième inverseur CMOS 38 sont connectées respectivement à la borne positive et à la masse de la source d'alimentation électrique du premier inverseur CMOS 22. Ces transistors MOS classiques 40 et 42 sont munis respectivement d'une grille conductrice 48 et 50 reliées électriquement entre elles. La référence S' représente la sortie du deuxième inverseur CMOS 38.

Ce deuxième transistor CMOS 38 servant de reférence permet d'ef fectuer une mesure dif férentielle entre le premier inverseur CMOS 22 et le deuxieme inverseur CMOS 38. La différence entre les tensions de sortie $V_s$ et $V_{s'}$, respectivement de l'inverseur CMOS 22 et de l'inverseur CMOS 38 est indépendante des parametres électriques des différents transistors MOS constituant ces deux inverseurs. Sous réserve que le gain en tension A soit suffisamment élevé, la difference de ces deux tensions est régie par l'équation:

$$V_s - V_{s'} - E - \varphi_M$$

dans laquelle $\varphi_M$ est le potentiel d'extraction du matériau constituant les conducteurs de grilles respectivement 48 et 50 des deux transistors MOS classiques 40 et 42.

Selon l'invention, le deuxième inverseur CMOS 38 peut être formé d'un transistor MOS ionosensible à canal P et d'un transistor MOS ionosensible à canal N reliés électriquement en sér ie, comme precedemment. Cet inverseur CMOS ionosensible joue exactement le même rôle que l'inverseur CMOS classique et présente des paramètres électriques identiques à ceux du premier inverseur CMOS auquel il est associe.

Par ailleurs, si le gain en tension A n'était pas jugé suffisant, compte tenu de la precision souhaitée sur la mesure, il serait possible d'intercaler un ou plusieurs étages amplificateurs entre la sortie et l'entrée des inverseurs CMOS. Cet étage d'amplification pourrait par exemple être constitué de deux inverseurs CMOS identiques à l'inverseur 38.

La réalisation du dispositif de mesure, conformément à l'invention, peut être ef fectuée suivant une technologie CMOS classique dont les dernières opérations technologiques ont été modif iées pour pouvoir inclure la couche ionosensible à la structure.

## Revendications

1. Dispositif de mesure de la concentration d'une espèce chimique ionique en utilisant des transistors MOS ionosensibles, caractérisé en ce qu'il comprend un inverseur CMOS (22) formé d'un transistor MOS ionosensible à canal P (24), muni d'une première couche ionosensible, et d'un transistor MOS ionosensible à canal N (26), muni d'une deuxième couche ionosensible, ces deux transistors étant reliés électriquement en série, et en ce qu'il comprend une électrode de référence (28) reliée électriquement à la sortie (S) de l'inverseur.

2. Dispositif de mesure selon la revendication 1, caractérisé en ce qu' il comprend, aussi, un second inverseur CMOS (38) formé d'un transistor MOS à canal P (40) et d'un transistor MOS à canal N (42) reliés en serie, ledit second inverseur (38) servant de référence afin de réaliser une mesure différentielle entre le premier et le second inverseurs.

3. Dispositif de mesure selon la revendication 1, caractérisé en ce qu'il comprend, aussi, un second inverseur CMOS (38) formé d'un transistor MOS ionosensible à canal P (40) et d'un transistor MOS ionosensible à canal N (42) reliés en série, servant de référence afin de réaliser une mesure différentielle entre le premier et le second inverseurs.

4. Dispositif de mesure selon l'une quelconque des revendications 1 à 3, caractérisé en ce que la première couche et la deuxième couche ionosensibles sont identiques.

5. Dispositif de mesure selon la revendication 4, caractérisé en ce que la première et la seconde couches ionosensibles sont constituées en un materiau isolant choisi dans le groupe comprenant la silice, le nitrure de silicium, l'alumine, l'oxyde de tantale.

6. Dispositif de mesure selon l'une quelconque des revendications 1 à 5, caractérisé en ce qu'au moins un étage amplificateur est intercalé entre la sortie et l'entrée des inverseurs.

7. Application du dispositif selon la revendication 5 à la mesure du pH d'une solution.

## Claims:

1. Apparatus for the measurement of the concentration of an ionic chemical species employing ion-sensitive MOS transistors, characterised in that it comprises a CMOS inverter (22) formed from a P-channel ion-sensitive MOS transistor (24) having a first ion-sensitive layer, and a N-channel ion-sensitive MOS transistor (26) having a second ion-sensitive layer, the two transistors being electrically connected in series, and in that it comprises a reference electrode (28), electrically, connected to the output (S) of the inverter.

2. Measurement apparatus according to claim 1, characterised in that it additionally comprises a second CMOS inverter (38) formed from a P-channel MOS transistor (40) and a N-channel MOS transistor (42), connected in series, said second inverter (38) acting as a reference to provide a differential measurement between the first and second inverters.

3. Measurement apparatus according to claim 1, characterised in that it additionally comprises a second CMOS inverter (38) formed from an ion-sensitive P-channel MOS transistor (40) and an ion-sensitive N-channel MOS transistor (42) connected in series, acting as a reference whereby to provide differential measurement between the first and second inverters.

4. Measurement apparatus according to any one of claims 1 to 3, characterised in that the first and second ion-sensitive layers are identical.

5. Measurement apparatus according to claim 4, characterised in that the first and second ion-sensitive layers are constituted by an insulating material selected from the group comprising silica, silicon nitride, alumina, and tantalum oxide.

6. Measurement device according to any one of claims 1 to 5, characterised in that at least one amplification stage is located between the output and the input of the inverters.

7. Application of apparatus according to claim 5 to the measurement of pH of a solution.


**Patentansprüche**

1. Vorrichtung zum Messen einer Ionenkonzentration unter Verwendung von ionenempfindlichen MOS-Transistoren, dadurch gekennzeichnet, daß die Vorrichtung einen CMOß-Inverter (22) umfaßt, der von einem auf dem P-Kanal ionenempfindlichen MOS-Transistor (24), der mit einer ersten ionenempfindlichen Schicht versehen ist, und einem auf dem Kanal N ionenempfindlichen MOS-Transistor (26) gebildet ist, der mit einer zweiten ionenempfindlichen Schicht versehen ist, wobei die zwei Transistoren elektrisch in Reihe geschaltet sind, und daß die Vorrichtung eine Bezugselektrode (28) aufweist, die elektrisch mit dem Ausgang (S) des Inverters verbunden ist.

2. Meßvorrichtung nach Anspruch 1, dadurch gekennzeichnet, daß sie ferner einen zweiten CMOS-Inverter (38) aufweist, der von einem MOS-Transistor (40) mit einem P-Kanal und einem MOS-Transistor (42) mit einem N-Kanal gebildet ist, die in Reihe geschaltet sind, und daß der zweite Inverter (32) als Bezug dient, um eine differenzielle Messung zwischen dem ersten und dem zweiten Inverter durchzuführen.

3. Meßvorrichtung nach Anspruch 1, dadurch gekennzeichnet, daß sie ferner einen zweiten CMOS-Inverter (38), der von einem MOS-Transistor (40) mit ionenempfindlichem P-Kanal und einem mit diesem in Reihe geschalteten MOS-Transistor (42) mit ionenempfindlichem Kanal N gebildet ist, der als Bezug dient, um eine differenzielle Messung zwischen dem ersten und dem zweiten Inverter durchzuführen.

4. Meßvorrichtung nach einem der Ansprüche 1 bis 3, dadurch gekennzeichnet, daß die erste und zweite ionenempfindliche Schicht miteinander identisch sind.

5. Meßvorrichtung nach Anspruch 4, dadurch gekennzeichnet, daß die erste und die zweite ionenempfindliche Schicht von einem isolierenden Material gebildet sind, welches aus der Siliciumoxyd, Siliciumnitrid, Alluminiumoxyd und Tantaloxyd umfassenden Gruppe ausgewählt ist.

6. Meßvorrichtung nach einem der Ansprüche 1 bis 5, dadurch gekennzeichnet, daß wenigstens eine Verstärkerstufe zwischen den Ausgang und den Eingang der Inverter geschaltet ist.

7. Anwendung der Vorrichtung nach Anspruch 5 zur pH-Messung einer Lösung.

0 080 402

FIG.1

FIG.2

FIG.3